# FASCICULE DE BREVET EUROPEEN

(11) **EP 0 496 702 B1**
(45) Date de publication et mention de la délivrance du brevet: **08.03.1995**
(21) Numéro de dépôt: 92810031.2
(22) Date de dépôt: 20.01.1992
(51) Int. Cl.: B60C 27/14

(54) **Dispositif antidérapant pour roue de véhicule**
Gleitschutzvorrichtung für Kraftfahrzeugreifen
Vehicle tire anti-skid device

(30) Priorité: 24.01.1991 CH 207/91
(43) Date de publication de la demande: 29.07.1992
(73) Titulaire: AUTOTYP S.A., CH-1037 Etagnières (CH)
(72) Inventeur: Metraux, Michel, CH-1009 Pully (CH)
(74) Mandataire: Dietlin, Henri

(56) Documents cités:
- EP-A- 0 214 623
- EP-A- 0 312 636
- EP-A- 0 376 426
- EP-A- 0 376 428

## Description

La présente invention est du domaine des dispositifs antidérapants pour roues de véhicules et a plus particulièrement pour objet un ensemble du type de chaînes à neige aptes à être automatiquement positionnées sur la périphérie du pneu au cours de l'avance du véhicule.

Un tel système est connu du brevet CH-657.812 qui décrit le principe de base d'un montage de dispositif antidérapant comportant une ou plusieurs chaînes portées à une extrémité de bras radiaux dont l'autre extrémité est appliquée selon l'axe de la roue par des dispositifs élastiques de traction fixés sur la face extérieure de la roue.

Dans le brevet EP-A-312.636 de la déposante, on décrit plus particulièrement un type de boîtier central solidaire d'une part des bras radiaux portant les chaînes et d'autre part des moyens de rappel en direction de l'axe de la roue. Dans son brevet EP-A-351.362 est décrit un chemin de roulement antidérapant permettant la tension automatique des chaînes sur la périphérie du pneu.

Dans ces différents documents, le système de rappel de l'ensemble en direction de l'axe de la roue est toujours réalisé par des moyens élastiques fixés en au moins trois points de la jante dans le but de maintenir le boîtier central sur l'axe de la roue et de le tirer en direction de celle-ci pour maintenir la chaîne à neige à la périphérie du pneu.

Afin de simplifier le montage, on a cherché a réaliser une fixation unique autorisant le montage, amovible au gré de l'utilisateur, d'un dispositif antidérapant tel que décrit plus haut. Dans les brevets européens EP-A-376.426 et EP-A-376.428, on décrit un système de montage sur l'un des écrous de fixation de la roue, au moyen d'une pièce de raccordement destinée à coopérer avec le boîtier central. Il est nécessaire de tendre le ressort destiné à appliquer et à maintenir le dispositif en position de fonctionnement. Les inconvénients d'un tel système sont que, après avoir fixé la pièce de raccordement à la roue du véhicule, l'utilisateur doit encore effectuer la mise sous tension des moyens élastiques. En outre, des essais ont montré que la rotation entre la pièce de raccordement et le point de fixation est néfaste au bon fonctionnement du dispositif antidérapant tandis que la rotation de la chaîne à neige, et par conséquent du boîtier, par rapport à l'axe de rotation de la roue est indispensable.

La présente invention vise à pallier les inconvénients décrits précédemment et a pour objet un dispositif antidérapant pour roue de véhicule, comportant un boîtier destiné à être fixé, de manière amovible, sur le côté extérieur de la roue, ce boîtier étant porteur de bras radiaux à l'extrémité extérieure desquels est disposé un chemin de roulement antidérapant, et étant solidaire de moyens élastiques de traction aptes à tirer ledit boîtier selon l'axe de la roue en direction de celle-ci de manière à disposer le chemin de roulement sur la surface périphérique du pneu. Ce dispositif est caractérisé en ce que le boîtier présente un levier s'étendant sur le côté du boîtier faisant face à la roue et relié au boîtier par lesdits moyens élastiques, ce levier présentant une extension apte à coopérer de manière amovible avec des moyens de fixation situés sur la roue, et en ce que lesdits moyens de fixation présentent un passage radial par rapport à l'axe de la roue, ledit passage étant agencé pour permettre à l'extension du levier d'être introduite et de coulisser librement relativement aux moyens de fixation.

Dans une variante préférentielle, les moyens de fixation sont composés d'un anneau fendu présentant intérieurement la forme extérieure d'un boulon de fixation de la roue et extérieurement un filetage cônique; et un chapeau présentant intérieurement un taraudage cônique et extérieurement des moyens de préhension.

Le dessin annexé représente, à titre d'exemples non limitatifs, des formes d'exécution de l'objet de l'invention.

La figure 1 est une vue en perspective d'une roue équipée d'un dispositif antidérapant selon l'invention.

La figure 2 est une vue partielle schématique de la roue et du dispositif de la figure 1, dans une coupe selon la ligne II-II.

La figure 3 est une vue latérale du boîtier central depuis le côté opposé à la roue.

La figure 4 est une vue en bout du boîtier central, avec coupe selon la ligne IV-IV à la figure 3 des éléments situés dans la moitié inférieure de la figure.

La figure 5 est une vue latérale du boîtier central depuis le côté accolé à la roue, montrant un levier de fixation.

La figure 6 est une vue de côté d'un tendeur en forme de navette avant sa mise en place pour relier les composants du boîtier central et le levier de fixation.

La figure 7 est une vue de côté dans la moitié inférieure et en coupe dans la moitié supérieure des moyens de fixation à un écrou de la roue.

La figure 8 représente une variante de boîtier central, vu en bout, avec coupe de certains constituants, ainsi qu'une variante des moyens de fixation à un écrou de la roue, vus de côté dans la moitié inférieure et en coupe dans la moitié supérieure.

La figure 9 est une vue latérale du boîtier central de la figure 8, avec coupe des moyens de fixation à l'écrou selon la ligne IX-IX.

La figure 10 représente une nouvelle variante de boîtier central et de moyens de fixation, vus en coupe transversale, certains éléments étant représentés écartés.

La figure 11 est une vue latérale du boîtier central de la figure 10, à une échelle légèrement réduite, avec coupe des moyens de fixation à l'écrou selon la ligne XI-XI.

La figure 12 est une vue en perspective éclatée des moyens de fixation à l'écrou de la roue représentés aux figures 10 et 11.

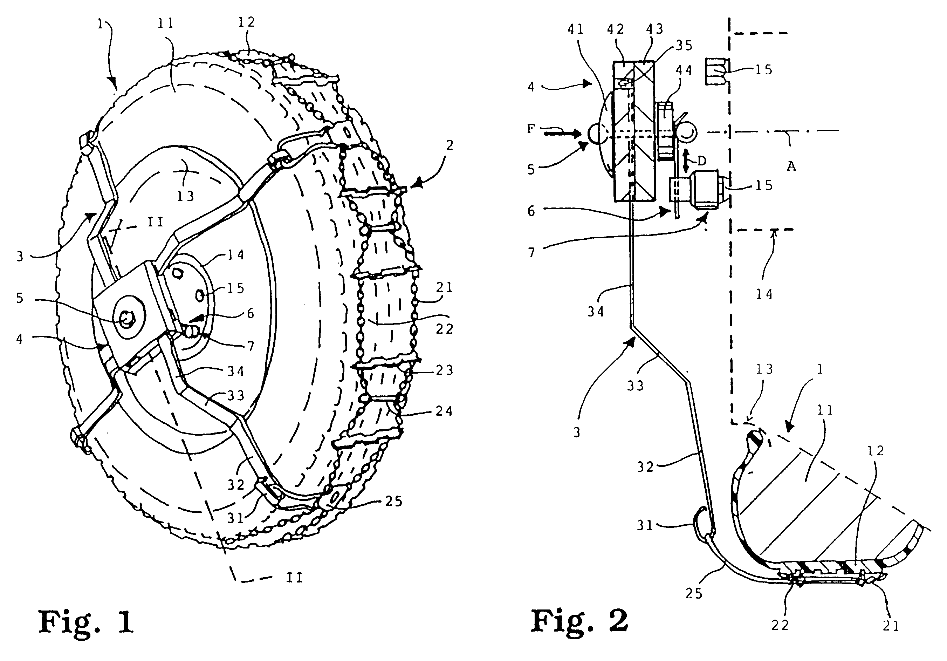

Le dispositif représenté à la figure 1 est monté sur une roue 1 d'un véhicule et comporte principalement un chemin de roulement antidérapant 2 maintenu par des bras radiaux 3 dont l'extrémité intérieure est fixée dans un boîtier central 4. Le boîtier central est traversé par un tendeur élastique 5 coopérant d'autre part avec un levier 6 de fixation du dispositif en un point situé hors de l'axe A de la roue 1. Le levier 6 est par exemple rendu solidaire de l'un des écrous de fixation de la roue par l'intermédiaire d'un adaptateur 7.

La roue 1 du véhicule des figures 1 et 2 présente un pneu 11 ayant une surface de roulement 12, une jante 13 et un moyeu 14 (schématisés en traitillés dans la coupe de la figure 2), ainsi que des écrous de fixation 15.

Le chemin de roulement antidérapant 2 est constitué, dans la représentation de la figure 1, de deux chaînes 21 et 22, maintenues éloignées l'une de l'autre par des barrettes 23 et appliquées contre la surface périphérique 12 du pneu par des éléments élastiques 24 tendant à rapprocher les chaînes 21 et 22. Le long du chemin de roulement sont insérés en outre des éléments appelés guide-chaînes 25, assurant la liaison avec les bras 3.

Aux figures 1 et 2, les bras radiaux 3 sont au nombre de quatre. Chacun comporte respectivement une boucle extérieure 31 recevant un guide-chaîne 25, une partie extérieure 32 au voisinage du pneu, une partie coudée 33 permettant de situer le boîtier central 4 à la bonne distance du moyeu 14, ainsi qu'une partie plane centrale 34, qui traverse le boîtier central dans lequel elle est retenue grâce à un retour à l'équerre 35 qui vient s'introduire dans un dégagement correspondant, qui sera présenté plus loin.

Le boîtier central 4 représenté schématiquement à la figure 2 est constitué par un flasque extérieur 41, deux coques 42 et 43 de réception des bras radiaux 3, un flasque intérieur 44, tous ces constituants présentant une ouverture centrale pour le passage du tendeur élastique 5 qui traverse en outre le levier 6 de fixation du dispositif à la roue du véhicule, de manière à rappeler l'ensemble dans le sens de la flèche F dirigée selon l'axe A de la roue en direction du véhicule.

Comme on le verra plus en détail par la suite, le levier 6 est retenu dans un chapeau 7 fixé sur l'un des écrous de fixation de la roue, par rapport auquel il peut se déplacer selon la flèche D.

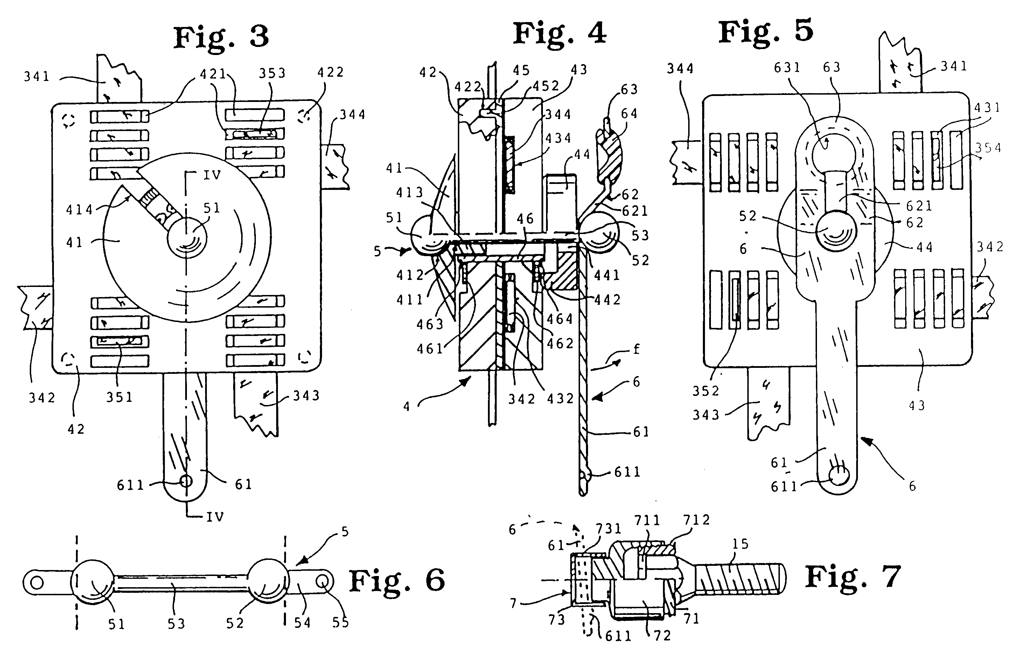

Les figures 3 à 5 représentent de manière plus détaillée les composants situés sur l'axe de la roue, et plus particulièrement le boîtier central. La partie plane 34 de chacun des bras 3 est partiellement représentée sous références 341 à 344. Les extrémités recourbées 351 et 353 des bras 341 et 343 respectivement sont visibles à la figure 3, tandis que les extrémités 352 et 354 sont visibles à la figure 5, car les bras opposés sont fixés dans la même coque 42 ou 43. Ces coques présentent en outre des séries d'ouvertures en échelles 421 et 431, destinées à recevoir l'extrémité recourbée 351 à 354 des bras radiaux, afin de pouvoir régler l'écartement entre les guide-chaînes opposés en fonction des différents types de roues.

A la figure 4 on notera dans la partie inférieure vue en coupe que le flasque extérieur 41 présente dans sa partie centrale une ouverture centrale 411 et un dégagement hémisphérique 412 destiné à recevoir la boule de retenue 51 prévue à l'extrémité extérieure du tendeur élastique 5. Le flasque comporte encore un moyeu central 413 destiné à assurer sa rotation par rapport aux coques 42 et 43 comme on le verra plus loin. En outre le flasque 41 comporte une fente radiale 414, visible à la figure 3, dont l'utilité sera indiquée plus loin.

Les coques 42 et 43, de fabrication identique, sont séparées par une paroi médiane 45 et présentent la forme générale d'un carré destiné à recevoir sur chaque face l'un des quatre bras radiaux. Comme on l'a déjà mentionné, les coques 42 et 43 ainsi que la paroi médiane 45 présentent une ouverture centrale pour le tendeur élastique 5, qui passe à l'intérieur d'un arbre creux central 46 qui reçoit à chaque extrémité une rondelle 461 ou 462 maintenue par un clips 463 ou 464 inséré dans une gorge prévue à cet effet pour réunir les deux coques, de telle manière qu'elles se superposent comme représenté au dessin lorsque le dispositif antidérapant est utilisé. Il subsiste néanmoins un léger jeu afin que l'utilisateur puisse replier celui-ci et le ranger sous un encombrement réduit, les bras 341 et 343 venant se superposer aux bras 342 et 344 par exemple. A cet effet, la paroi médiane 45 comporte dans ses quatre coins un épaulement 452 destiné à s'engager dans un dégagement correspondant 422 pratiqué dans la coque 42 pour assurer un mouvement de rotation aisé entre la coque 42 et la coque 43. On remarquera encore dans la coupe de la figure 4 que les bras 342 et 344 sont glissés dans des dégagements parallèles 432 et 434 pratiqués dans la coque 43, ces dégagements débouchant dans les ouvertures en échelle 431 visibles à la figure 5 et destinées à recevoir respectivement les extrémités recourbées 352 et 354.

Le flasque intérieur 44 est constitué par une pastille cylindrique présentant une ouverture centrale 441 pour le passage du tendeur 5 et une paroi intérieure 442 destinée à reposer sur la rondelle 462. Sa face extérieure comporte des dégagements non représentés au dessin destinés à diminuer la surface en contact avec le levier 6, afin de faciliter le mouvement de rotation de celui-ci par rapport au flasque intérieur 44 et par conséquent à l'ensemble du boîtier 4. L'épaisseur du flasque 44 est choisie de telle manière que le boîtier central soit correctement positionné par rapport à la roue à équiper, et plus précisément au boulon sur lequel il sera fixé.

Le tendeur élastique 5 a une forme de navette constituée par deux boules de retenue 51 et 52 reliées par un cordon central 53. Dans la représentation de détail de la figure 6, on notera que les boules sont prolongées vers l'extérieur par des tirettes 54 présentant un trou 55 destiné à recevoir un outil de mise en place, avant d'être sectionnées selon les lignes indiquées à la figure 6. Il va sans dire que le tendeur élastique 5 sera réalisé dans une matière conservant ses propriétés d'élasticité par grands froids.

Le levier 6 de fixation à la roue du véhicule est constitué par une pièce de forme visible dans la coupe de la figure 4 et comportant une queue 61 s'étendant au-delà du boîtier central 4, une partie inclinée 62 s'étendant de l'autre côté de l'axe du boîtier central et terminée par une manette 63 disposée dans un plan sensiblement parallèle à celui de la queue 61. A l'extrémité de la queue 61, on peut pratiquer un bossage 611 dont l'utilité sera mentionnée plus loin. La partie inclinée 62 comporte un passage central 621 se prolongeant d'une part dans la partie 61 d'une valeur correspondant au diamètre du cordon central 53 et d'autre part jusqu'à une ouverture circulaire 631 pratiquée dans la manette 63 et d'un diamètre correspondant sensiblement à la boule de retenue 52. Un bouchon 64 est prévu pour obstruer l'ouverture 631, comme représenté dans la coupe de la figure 4 alors que le bouchon n'est pas représenté à la figure 5, pour la clarté du dessin.

L'angle d'inclinaison de la partie 62 autorise le déplacement du levier 6 dans le sens de la flèche f sans que la manette 63 et son bouchon 64 ne viennent buter sur les constituants du boîtier central.

Comme on l'a déjà mentionné, le levier 6 est fixé à la roue 1, en dehors de l'axe de celle-ci, par exemple sur l'un des boulons 15. A la figure 7 on a représenté un adaptateur 7 prévu à cet effet. Il comporte un anneau fendu 71 présentant intérieurement six pans 711 et extérieurement un filetage cônique 712, destiné à coopérer avec un taraudage cônique pratiqué dans un chapeau 72. Vers l'extérieur le chapeau 72 comporte un pont de fixation 73 du levier 6, ce pont présentant un passage 731 dans lequel la queue 61 peut être introduite librement et avec jeu comme représenté à la figure 7. On veillera à disposer le passage 731 radialement par rapport à l'axe de la roue. Il est à noter qu'en raison de la souplesse conférée par ce système de fixation élastique, la queue 61 peut passer de la position représentée à la figure 5, où elle est sensiblement perpendiculaire au tendeur élastique, à la position de légère inclinaison représentée en traitillés à la figure 7. On notera dans cette figure que le bossage 611 permet d'assurer le maintien de l'extrémité du levier 6 dans l'adaptateur 7.

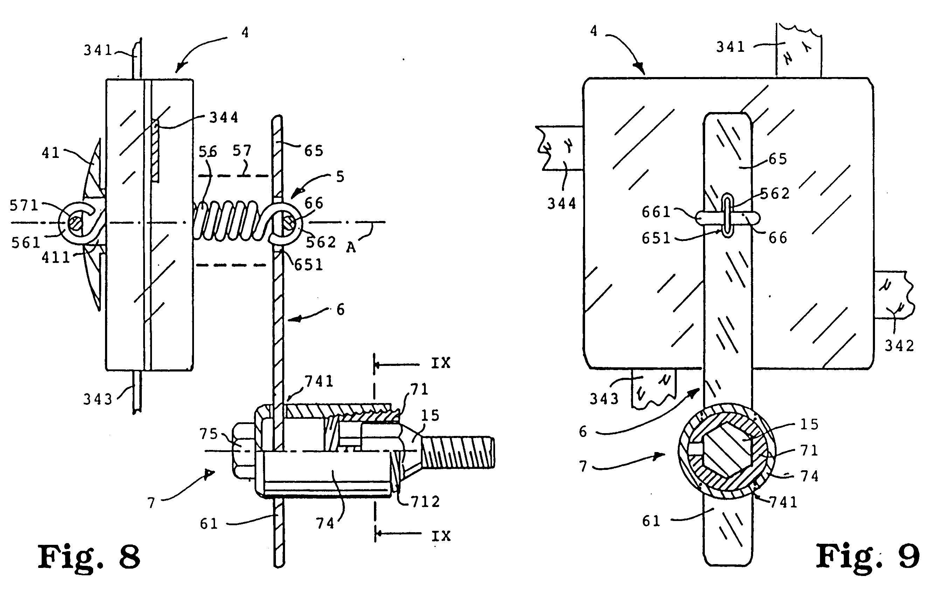

Dans la forme d'exécution des figures 8 et 9, les principales variantes sont les suivantes :
- le tendeur élastique 5 est un ressort hélicoïdal 56
- le levier 6 est droit et non plus coudé
- le flasque intérieur 44 est supprimé
- l'adaptateur 7 est de conception différente.

Il va de soi que ces variantes peuvent également être introduites individuellement, en combinant les constituants des différentes figures représentées au dessin.

Les moyens élastiques de traction du boîtier selon l'axe A de la roue sont constitués, dans la représentation de la figure 8, par un ressort hélicoïdal 56 comportant à chaque extrémité une spire 561 ou 562 autorisant la liaison entre le boîtier central 4 et la roue, et plus particulièrement son boulon 15. En outre le ressort hélicoïdal 56 peut être protégé par un soufflet 59 disposé entre le boîtier 4 et le levier 6 et schématisé au dessin en traitillés.

La spire extérieure 561 fait saillie par l'ouverture centrale 411 du flasque extérieur 41 et est maintenue par une goupille de fixation 563. Dans cette variante, il n'est pas nécessaire que le flasque 41 comporte une fente radiale comme précédemment. La spire intérieure 562 s'étend au-delà du levier 6 et est fixée par une goupille 66, comme on le verra plus loin. L'avantage du montage avec un ressort hélicoïdal par rapport à la navette élastique des figures 3 à 6 est d'assurer un meilleur centrage du boîtier par rapport à la roue.

Comme visible à la figure 8, on peut utiliser un levier 6 droit, dont une extrémité déborde du boîtier 4 et comporte la queue 61 destinée à la fixation à l'adaptateur 7 de fixation au boulon 15. La partie 65 du levier droit faisant face au boîtier 4 présente une fente 651 permettant le passage de la spire 562 du ressort hélicoïdal 56, qui est fixé par la goupille 66. Cette goupille 66 peut avoir des extrémités 661 repliées de part et d'autre du levier 65.

L'adaptateur 7 des figures 8 et 9 comporte, comme celui décrit précédemment, un anneau fendu 71 à filetage conique 712 destiné à coopérer avec un chapeau 74 dont le fond présente extérieurement la forme d'un boulon à 6 pans 75 de dimensions correspondant à celles des écrous de fixation de la roue, de manière à être serrée au moyen des mêmes outils. Le chapeau 74 comporte en outre une ouverture diamétrale 741 destinée au libre passage de la queue 61 du levier 6. Il va de soi que l'adaptateur 7 sera disposé sur l'écrou de telle manière que l'ouverture 741 soit orientée vers l'axe A de la roue.

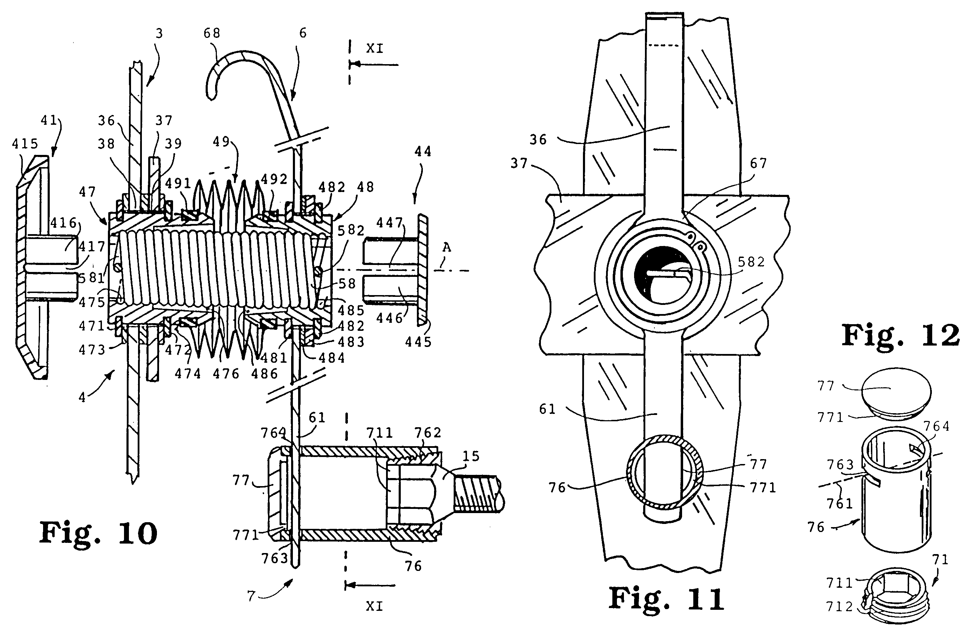

Dans la forme d'exécution des figures 10 à 12, les principales variantes par rapport aux formes d'exécution décrites jusqu'ici sont les suivantes :
- les quatre bras radiaux 3 sont remplacés par deux barres allongées s'étendant de part et d'autre d'une ouverture centrale
- le boîtier central 4 est constitué de deux corps cylindriques reliés par un soufflet de protection
- le levier 6 comporte une boucle de préhension
- l'adaptateur 7 est de conception légèrement différente.

Les bras radiaux 3 sont constitués par deux barres 36 et 37, qui s'étendent symétriquement de part et d'autre d'une ouverture centrale 38 ou 39. Cette variante d'une part autorise un gain de place de rangement car les pièces 36 et 37 sont parfaitement superposables et d'autre part facilite le déployement et le rangement du dispositif antidérapant. A leurs extrémités extérieures, non représentées au dessin, les barres 36 et 37 coopèrent avec des guide-chaînes 25, tels que décrits en regard de la figure 1.

Le boîtier central 4 est constitué de deux corps cylindriques 47 et 48, reliés par un soufflet de protection 49. Il est fermé à ses extrémités par deux flasques 41 et 44.

Le corps cylindrique extérieur 47 est destiné à recevoir les bras radiaux 36 et 37. A cet effet il présente extérieurement une portée d'un diamètre légèrement inférieur aux ouvertures centrales 38 ou 39 des bras, ainsi que deux rainures destinées à recevoir des circlips 471 et 472. Trois rondelles 473 sont intercalées entre les circlips et les barres. Le corps 47 comporte en outre une gorge 474 destinée à recevoir le rebord 491 situé à une extrémité du soufflet 49. Intérieurement, le corps cylindrique 47 présente un dégagement hélicoïdal 475 destiné à recevoir un ressort hélicoïdal 58 dont l'extrémité 581 est repliée vers l'intérieur et maintient le flasque extérieur 41. Le dégagement 475 s'évase en un dégagement tronconique 476 autorisant un léger mouvement du ressort 58. Le flasque 41 comporte un chapeau de couverture 415 et un bouchon cylindrique central 416 destiné à être serré dans le ressort 58. Le bouchon 416 présente une fente diamétrale 417 destinée au passage de l'extrémité 581 du ressort 58.

Le corps cylindrique intérieur 48 est destiné à recevoir la partie centrale du levier de fixation 6, qui est maintenu au moyen de circlips 481 et 482 dans des rainures identiques à celles décrites précédemment. Une rondelle 483 et une cale d'usure 484 sont également prévues pour autoriser la rotation du levier 6 par rapport au boîtier 4 lorsque celui-ci est entraîné en rotation par le déplacement du chemin de chaîne à la périphérie du pneu. Le corps 48 présente une gorge extérieure destinée à recevoir le rebord 492 du soufflet 49. Intérieurement, le corps cylindrique 48 présente aussi un dégagement hélicoïdal 485 coopérant avec le ressort hélicoïdal 58 dont l'extrémité 582 est repliée vers l'intérieur et reçoit le flasque intérieur 44. Celui-ci comporte un chapeau de fermeture 445 et un bouchon central 446 destiné à être introduit dans le ressort 58. Le bouchon cylindrique 446 présente une fente diamétrale 447 destinée à laisser libre passage à l'extrémité 582 du ressort 58. Le dégagement 485 s'évase en un dégagement tronconique 486 autorisant un léger mouvement du ressort 58.

Le soufflet 49 sert, comme on l'a vu, de liaison entre les corps cylindriques 47 et 48 et évite l'entrée de corps étrangers (poussières ou neige) dans le mécanisme. Il se déforme en longueur lorsque le ressort 58 est distendu et autorise un léger non-alignement des corps cylindriques ou, en d'autres termes, du corps 47 porteur des bras et donc de la chaîne d'une part, et du corps 48, indirectement solidaire de la roue d'autre part.

De préférence, les corps cylindriques 47 et 48 sont métalliques, en laiton par exemple; le soufflet 49 en une matière à base de caoutchouc conservant son élasticité par grands froids; les flasques 41 et 44 en plastique.

Le levier 6 peut être décrit en trois parties en se référant aux figures 10 et 11. Il comprend une queue 61 destinée à la liaison amovible à l'adaptateur 7 fixé sur la vis de la roue. Sa partie centrale 67 est élargie et comporte une ouverture d'un diamètre supérieur à la portée du corps 48 par rapport auquel elle peut tourner. Finalement le levier comporte une boucle 68 facilitant sa préhension lorsque l'utilisateur l'introduit dans l'adaptateur 7. Il est à noter que l'extrémité du levier 6 comportant la boucle 68 fait un léger angle vers l'extérieur afin de faciliter son maniement.

L'adaptateur 7 destiné à la fixation de l'assemblage décrit sur la vis 15 de la roue est bien visible aux figures 10 et 12. Il est constitué par un anneau fendu 71, un corps tubulaire 76 et un bouchon 77. Comme déjà décrit, l'anneau fendu 71 présente intérieurement six pans 711 et extérieurement un filetage cônique 712. Le corps tubulaire 76 présente un taraudage cônique 762 qui permet de resserrer l'anneau fendu sur la tête de l'écrou 15. Il comporte également un passage selon l'axe 761 constitué de deux fentes 763 et 764, destiné à créer un dégagement dans lequel la queue 61 du levier 6 peut être introduite. Lorsque l'adaptateur est mis en place, on veillera à ce que l'axe 761 soit orienté vers un point situé sur l'axe A de la roue. Le bouchon 77 est muni d'une portée 771 destinée à son serrage à l'extrémité du corps tubulaire 76.

Avant d'être mis sur le marché, le dispositif antidérapant est monté de la manière suivante. Le chemin de roulement antidérapant 2 est fixé en bout des bras radiaux 3, comme représenté à la figure 1. Les parties planes 341 à 344 des bras sont introduites dans les dégagements 421 ou 431 correspondants et l'ensemble constitué par les deux coques 42 et 43 ainsi que par la paroi médiane 45 sont fixés autour de l'arbre creux 46 au moyen des rondelles 461 et 462, maintenues par les circlips 463 et 464 dans les gorges prévues à cet effet aux extrémités du tube 46.

Dans la variante des figures 3 à 5, le cordon central 53 de la navette élastique 5, telle que représentée à la figure 6 est introduit dans la fente radiale 414 du flasque 41. La boule de retenue 52 est introduite, par sa tirette 54, successivement dans l'arbre creux 46, par l'ouverture centrale 441 du flasque intérieur 44 et par l'ouverture circulaire 631 pratiquée dans la manette 63. Il est alors possible de couper les tirettes 54 aux deux extrémités du tendeur 5, qui servent uniquement à faciliter la mise en place de ce dernier en autorisant une déformation par élongation de celui-ci. En raison de la forme particulière du levier 6, dès que le tendeur agit pour resserrer les composants disposés entre les boules de retenue 51 et 52, le levier 6 passe sensiblement dans la position représentée à la figure 4. Le bouchon 64 est alors mis en place dans l'ouverture 631 et ceci dans un double but. D'une part pour éviter qu'au cours des manipulations de pose et d'enlèvement du dispositif selon l'invention, l'ouverture 631 ne laisse s'échapper la boule de retenue 52. D'autre part pour faciliter la prise de la manette 63 au cours de ces mêmes manipulations.

Dans la variante des figures 8 et 9, le ressort 56 est introduit dans l'ouverture 411 du flasque extérieur 41, passe au travers du boîtier central 4 et au travers du soufflet 59 avant de traverser la fente 651 du levier droit 65. Le ressort est fixé par les goupilles 571 et 66, de manière usuelle.

Dans la variante des figures 10 à 12, les bras 36 et 37 sont fixés sur le corps cylindrique 47 au moyen des circlips 471 et 472, après mise en place des rondelles 473. Le ressort hélicoïdal 58 est vissé dans les dégagements hélicoïdaux 475 et 485 tandis que les extrémités 491 et 492 du soufflet 49 sont insérées dans les gorges correspondantes des corps 47 et 48. Le levier 6 est fixé au moyen des circlips 481 et 482 après mise en place de la rondelle et de la cale d'usure 483 et 484. Finalement les bouchons 41 et 44 sont enfoncés aux deux extrémités du dispositif.

Les différents dispositifs anti-dérapants selon l'invention décrits jusqu'ici peuvent alors être mis sur le marché. Avant de pouvoir l'utiliser, il sera encore nécessaire de munir l'un des écrous de chaque roue à équiper de l'un des adaptateurs représentés aux figures 7, 8 ou 12, en veillant à ce que le passage diamétral 731, 741 ou respectivement 761, dans lequel la queue 61 sera introduite, soit orienté en direction d'un point situé sur l'axe A de la roue.

Lorsque l'utilisateur doit installer le dispositif antidérapant selon l'invention, il dispose de manière connue le chemin de roulement antidérapant 2 à la périphérie de la roue 1, sauf dans la partie inférieure reposant sur le sol. Il introduit la queue 61 dans le passage 731, 741 ou 761 de l'adaptateur, de manière à disposer le boîtier central sensiblement sur l'axe A de la roue. Dès que le véhicule est déplacé, la chaîne est automatiquement mise en place grâce à la traction exercée par le tendeur élastique 5.

Au cours du mouvement du véhicule, on sait que le chemin de roulement antidérapant 2 a tendance à se déplacer tout au long de la surface périphérique du pneu. Dans le cas représenté aux figures 3 à 5, le levier 6, la navette élastique 5 de tension ainsi que le flasque extérieur 41 restent sensiblement solidaires du moyeu de la roue, tandis les autres composants du boîtier central (et plus particulièrement les coques 42 et 43 dans lesquelles sont fixés les bras portant les chaînes) peuvent être entraînés en rotation pour autoriser le mouvement relatif de la chaîne par rapport à la roue.

Dans la variante des figures 10 à 12, le levier 6 peut tourner par rapport au corps 48 et reste fixé à la roue alors que les autres composants du dispositif restent solidaires de la chaine.

En plus de la simplification de montage selon la présente invention, le mouvement relatif entre la partie du levier 61 et l'adaptateur dans lequel celle-ci est introduite, autorise un léger déplacement, d'une part radial selon la flèche D à la figure 2, et d'autre part sensiblement selon l'axe d'application de la force F, en raison du pivotement de l'ensemble selon la flèche f à la figure 4.

Dans une variante non représentée au dessin, on pourrait également prévoir un levier 6 en forme de U dont l'une des branches soit solidaire du boîtier et dont l'autre branche corresponde à l'extension 61. Cette variante permettrait la fixation d'un dispositif antidérapant selon l'invention sur une roue fixée par un boulon central unique.

## Revendications

1. Dispositif antidérapant pour roue de véhicule, comportant un boîtier (4) destiné à être fixé, de manière amovible, sur le côté extérieur de la roue, ce boîtier étant porteur de bras radiaux (3) à l'extrémité extérieure desquels est disposé un chemin de roulement antidérapant (2), et étant solidaire de moyens élastiques de traction (5) aptes à tirer ledit boîtier selon l'axe de la roue en direction de celle-ci de manière à disposer le chemin de roulement sur la surface périphérique du pneu,
caractérisé en ce que le boîtier (4) présente un levier (6) s'étendant sur le côté du boîtier faisant face à la roue (1) et relié au boîtier par lesdits moyens élastiques,
ce levier présentant une extension (61) apte à coopérer de manière amovible avec des moyens de fixation (7) situés sur la roue,
et en ce que lesdits moyens de fixation (7) présentent un passage radial (731;741;761) par rapport à l'axe A de la roue, ledit passage étant agencé pour permettre à l'extension (61) du levier (6) d'être introduite et de coulisser librement relativement aux moyens de fixation (7).

2. Dispositif selon la revendication 1, caractérisé en ce que les moyens de fixation (7) sont agencés pour positionner le passage radial de manière inamovible et permettre à l'extension (61) du levier (6) de coulisser radialement par rapport à l'axe de la roue.

3. Dispositif selon la revendication 1 ou 2, caractérisé en ce que les moyens de fixation (7) comportent un anneau fendu (71) agencé pour venir s'adapter sur un boulon (15) de fixation de la roue (1) et extérieurement un filetage cônique (712); et un corps cylindrique (72,74,76) présentant intérieurement un taraudage cônique (762) destiné à être vissé sur le filetage (712).

4. Dispositif selon la revendication 3, caractérisé en ce que ledit corps cylindrique comprend en outre des moyens de préhension (75).

5. Dispositif selon l'une des revendications 1 à 4, caractérisé en ce que les moyens élastiques sont constitués par un corps allongé (5; 53,56), dont une extrémité (51,561) coopère avec ledit boîtier et dont l'autre extrémité (52,562) coopère avec ledit levier (6).

6. Dispositif selon la revendication 5, caractérisé en ce que ledit boîtier présente une ouverture centrale traversée par ledit corps élastique allongé (5).

7. Dispositif selon la revendication 6, caractérisé en ce que le boîtier central (4) comporte en outre un flasque extérieur (41) apte à tourner avec ledit corps (5) par rapport au boîtier (4) et aux bras (3; 341,342, 343,344) portant le chemin de roulement antidérapant (2).

8. Dispositif selon la revendication 5, caractérisé en ce que ledit corps (5) est constitué par une navette (53) disposée entre deux boules de retenue (51,52).

9. Dispositif selon la revendication 5, caractérisé en ce que ledit corps (5) est constitué par un ressort hélicoïdal (56).

10. Dispositif selon l'une des revendications 1 à 4, caractérisé en ce que le boîtier comporte deux corps cylindriques (47, 48) aptes à recevoir respectivement les bras radiaux (3;36,37) et le levier (6), lesdits corps comportant des moyens de fixation desdits moyens élastiques.

11. Dispositif selon la revendication 10, caractérisé en ce que chacun des corps (47,48) comporte intérieurement un dégagement hélicoïdal (474,485) apte à recevoir l'extrémité d'un ressort hélicoïdal (58).

12. Dispositif selon la revendication 10, caractérisé en ce que les spires extérieures (581,582) du ressort (58) sont repliées vers l'intérieur et sont aptes à maintenir un flasque (41,44).

13. Dispositif selon la revendication 10, caractérisé par un soufflet de protection disposé entre lesdits corps (47,48).

14. Dispositif selon la revendication 1 ou 10, caractérisé en ce chaque paire de bras radiaux est constituée par une barre (36,37) s'étendant de part et d'autre d'une ouverture centrale (38,39) fixée dans le boîtier central.

## Claims

1. An anti-skid device for vehicle wheels, comprising a housing (4) intended to be fastened removably on the outer side of the wheel, said housing bearing radial arms (3) on the outer end of which there is arranged an anti-skid travel path (2), and being integral with elastic pulling means (5) capable of pulling the said housing along the axis of the wheel in the direction towards the latter so as to place the travel path on the peripheral surface of the wheel, characterized by the fact that the housing (4) has a lever (6) which extends on the side of the housing facing the wheel (1) and is connected to the housing by said elastic means, said lever having an extension (61) adapted to cooperate removably with fastening means (7) located on the wheel, and by the fact that the said fastening means (7) have a radial passage (731; 741; 761) with respect to the axis A of the wheel, said passage being adapted to permit the extension (61) of the lever (6) to be introduced and slide freely relative to the fastening means (7).

2. A device according to Claim 1, characterized by the fact that the fastening means (7) are adapted to position the radial passage in non-removable manner and to permit the extension (61) of the lever (6) to slide radially with respect to the axis of the wheel.

3. A device according to Claim 1 or 2, characterized by the fact that the fastening means (7) comprise a split ring (7) adapted to be fitted on a fastening bolt (15) of the wheel (1) and on the outside, a conical thread (712); and a cylindrical body (72, 74, 76) having on the inside a conical thread (762) intended to be screwed on the thread (712).

4. A device according to Claim 3, characterized by the fact that said cylindrical body furthermore comprises grasping means (75).

5. A device according to any of Claims 1 to 4, characterized by the fact that the elastic means are formed of an elongated body (5; 53, 56) one end (51, 561) of which cooperates with said housing and the other end (52, 562) of which cooperates with said lever (6).

6. A device according to Claim 5, characterized by the fact that the said housing has a central opening traversed by said elongated elastic body (5).

7. A device according to Claim 6, characterized by the fact that the central housing (4) furthermore has an outer shield (41) adapted to turn with said body (5) with respect to the housing (4) and the arms (3; 341, 342, 343, 344) bearing the anti-skid travel path (2).

8. A device according to Claim 5, characterized by the fact that said body (5) is formed of a shuttle (53) arranged between two retention balls (51, 52).

9. A device according to Claim 5, characterized by the fact that said body (5) is formed of a coil spring (56).

10. A device according to any of Claims 1 to 4, characterized by the fact that the housing comprises two cylindrical bodies (47, 48) adapted to receive the radial arms (3; 36, 37) and the lever (6) respectively, said bodies having means for fastening the said elastic means.

11. A device according to Claim 10, characterized by the fact that each of the bodies (47, 48) has, on its inside, a helical recess (474, 485) adapted to receive the end of a coil spring (58).

12. A device according to Claim 10, characterized by the fact that the outer turns (581, 582) of the spring (58) are bent towards the inside and are adapted to hold a shield (41, 44).

13. A device according to Claim 10, characterized by a protective bellows arranged between said bodies (47, 48).

14. A device according to Claim 1 or 12, characterized by the fact that each pair of radial arms is formed of a bar (36, 37) which extends on both sides of a central opening (38, 39) and is fastened in the central housing.

## Patentansprüche

1. Gleitschutzvorrichtung für ein Fahrzeugrad mit einem Gehäuse (4), welches löslich an der Außenseite eines Rades befestigt wird, wobei dieses Gehäuse radiale Arme (3) trägt, an deren äußerem Ende eine rutschfeste Lauffläche (2) angeordnet ist, und das mit elastischen Zugmitteln (5) verbunden ist, welche dieses Gehäuse in der Achse des Rades in dessen Richtung so ziehen können, daß die Lauffläche auf dem Umfang des Rades angeordnet wird,
**dadurch gekennzeichnet**, **daß** das Gehäuse (4) einen Hebel (6) aufweist, welcher sich an der Seite des Gehäuses erstreckt, welche sich gegenüber dem Rad (1) befindet, und der an dem Gehäuse mit Hilfe der elastischen Mittel befestigt wird,
wobei dieser Hebel eine Verlängerung (61) aufweist, welche löslich mit auf dem Rad angeordneten Befestigungsmitteln (7) zusammenwirken kann,
und dadurch, daß diese Befestigungsmittel (7) einen radialen Durchgang (731; 741; 761) gegenüber der Achse A des Rades aufweisen, wobei dieser Durchgang so beschaffen ist, daß die Verlängerung (61) des Hebels (6) eingeführt werden und frei gegenüber den Befestigungsmitteln (7) gleiten kann.

2. Vorrichung nach Anspruch 1,
**dadurch gekennzeichnet**, **daß** die Befestigungsmittel (7) so ausgelegt sind, daß sie den radialen Durchgang in nicht löslicher Weise positionieren können und der Verlängerung (61) des Hebels (6) erlauben, in radialer Richtung gegenüber der Radachse zu gleiten.

3. Vorrichtung nach einem der Ansprüche 1 oder 2,
**dadurch gekennzeichnet**, **daß** die Befestigungsmittel (7) einen geschlitzten Ring (71) aufweisen, der so ausgelegt ist, daß er auf einen Bolzen (15) für die Befestigung des Rades (1) paßt und an seiner Außenseite ein konisches Gewinde (712) aufweist, sowie einen zylindrischen Körper (72, 74, 76), der ein konisches Innengewinde (762) aufweist, welches auf das Gewinde (712) aufgeschraubt wird.

4. Vorrichtung nach Anspruch 3,
**dadurch gekennzeichnet**, **daß** der zylindrische Körper außerdem Griffmittel (75) enthält.

5. Vorrichtung nach einem der Ansprüche 1 bis 4,
**dadurch gekennzeichnet**, **daß** die elastischen Mittel aus einem länglichen Körper (5; 53, 56) bestehen, bei dem ein Ende (51, 561) mit dem Gehäuse zusammenwirkt, während das andere Ende (52, 562) mit dem Hebel (6) zusammenwirkt.

6. Vorrichtung nach Anspruch 5,
**dadurch gekennzeichnet**, **daß** das Gehäuse eine zentrale Öffnung aufweist, welche von dem länglichen elastischen Körper (5) durchquert wird.

7. Vorrichtung nach Anspruch 6,
**dadurch gekennzeichnet**, **daß** das zentrale Gehäuse (4) außerdem einen äußeren Flansch (41) aufweist, welcher sich mit dem Körper (5) gegenüber dem Gehäuse (4) und den Armen (3; 341, 342, 343, 344), welche die rutschfeste Lauffläche (2) tragen, drehen kann.

8. Vorrichtung nach Anspruch 5,
**dadurch gekennzeichnet**, **daß** der Körper (5) aus einem Schiffchen (53) besteht, welches zwischen zwei Haltekugeln (51, 52) angeordnet ist.

9. Vorrichtung nach Anspruch 5,
**dadurch gekennzeichnet**, **daß** der Körper (5) aus einer Schraubenfeder (56) besteht.

10. Vorrichtung nach einem der Ansprüche 1 bis 4,
**dadurch gekennzeichnet**, **daß** das Gehäuse zwei zylindrische Körper (47, 48) aufweist, welche jeweils die radialen Arme (3; 36, 37) und den Hebel (6) aufnehmen können, wobei diese Körper Mittel für die Befestigung der elastischen Mittel aufweisen.

11. Vorrichtung nach Anspruch 10,
**dadurch gekennzeichnet**, **daß** jeder der Körper (47, 48) an seiner Innenseite einen schraubenförmigen Freistich (474, 485) aufweist, der geeignet ist, das Endstück einer Schraubenfeder (58) aufzunehmen.

12. Vorrichtung nach Anspruch 10,
**dadurch gekennzeichnet**, **daß** die äußeren Windungen (581, 582) der Feder (58) nach innen gebogen und geeignet sind, einen Flansch (41, 44) zu halten.

13. Vorrichtung nach Anspruch 10,
**dadurch gekennzeichnet**, **daß** zwischen den Körpern (47, 48) ein Schutzbalg vorgesehen ist.

14. Vorrichtung nach einem der Ansprüche 1 oder 10,
**dadurch gekennzeichnet**, **daß** die jeweiligen Paare radialer Arme aus einer Stange (36, 37) bestehen, welche sich auf beiden Seiten einer zentralen Öffnung (38, 39) erstreckt, die in dem zentralen Gehäuse befestigt ist.
